Europäisches Patentamt

(19) European Patent Office

Office européen des brevets

(11) **EP 1 181 126 B1**

(12) **FASCICULE DE BREVET EUROPEEN**

(45) Date de publication et mention
de la délivrance du brevet:
**03.11.2004 Bulletin 2004/45**

(51) Int Cl.⁷: **B23K 10/02**

(21) Numéro de dépôt: **00925354.3**

(86) Numéro de dépôt international:
**PCT/FR2000/001153**

(22) Date de dépôt: **28.04.2000**

(87) Numéro de publication internationale:
**WO 2000/067943 (16.11.2000 Gazette 2000/46)**

(54) **PROCEDE ET INSTALLATION AUTOMATIQUE DE SOUDAGE MULTIPLASMA**

VERFAHREN UND ANLAGE ZUM AUTOMATISCHEN MEHR-PLASMASCHWEISSEN

AUTOMATIC METHOD AND INSTALLATION OF MULTIPLE PLASMA JET WELDING

(84) Etats contractants désignés:
**AT BE CH CY DE DK ES FI FR GB GR IE IT LI LU
MC NL PT SE**

(30) Priorité: **07.05.1999 FR 9905858**

(43) Date de publication de la demande:
**27.02.2002 Bulletin 2002/09**

(73) Titulaires:
• **LA SOUDURE AUTOGENE FRANCAISE**
  **75321 Paris Cedex 07 (FR)**
• **L'air Liquide, S.A. à Directoire et Conseil de
  Surveillance pour l'Etude et l'Exploitation des
  Procédés Georges Claude
  75321 Paris Cedex 07 (FR)**

(72) Inventeur: **AUZARY, Louis**
**F-75019 Paris (FR)**

(74) Mandataire: **Pittis, Olivier**
**L'Air Liquide, S.A.,
Service Brevets & Marques,
75, Quai d'Orsay
75321 Paris Cedex 07 (FR)**

(56) Documents cités:
**EP-A- 0 896 853          DE-A- 2 708 618
US-A- 4 143 260**

## Description

La présente invention concerne un procédé et une installation de soudage multi-plasma, de préférence triplasma, notamment des aciers, des aciers inoxydables et des bases nickel.

Il existe actuellement au moins deux techniques de soudage couramment utilisées pour souder les matériaux en aciers, aciers inox, nickel, à savoir le soudage laser et le soudage TIG.

En soudage TIG (pour Tungsten Inert Gas) repose sur la génération d'un arc électrique entre une électrode, telle une électrode en tungstène avec apport d'un fil fusible, et la ou les pièces à souder.

La fusion du métal est réalisée sous atmosphère gazeuse de protection, par exemple sous un flux d'argon, d'hélium ou d'un mélange de ces deux gaz.

Or, la vitesse de soudage d'un procédé TIG varie en fonction notamment de l'épaisseur du matériau à souder et de la nuance, nature ou composition du matériau à souder.

Par exemple, une vitesse de soudage de 1,3 m.min$^{-1}$ peut être atteinte pour un matériau et une épaisseur donnés, alors que ce même matériau en une épaisseur inférieure, par exemple d'environ la moitié, peut être soudé à une vitesse de soudage de l'ordre de 4 m.min$^{-1}$, soit approximativement 3 fois plus vite.

Afin de tenter d'améliorer l'efficacité du soudage, une variante du soudage TIG a été développée, à savoir le soudage TIG multicathodes avec double flux gazeux de protection.

Ainsi, le document "High speed single sided welding of thin sheet by multi electrode arc welding"; K. Yasuda et al.; Quarterly Journal of the Japan Welding Society; 1987-5(4), p.477-482, rapporte que le soudage TIG double cathodes permet d'améliorer la vitesse de soudage de plaques de nuance SUS 304 et d'épaisseur allant jusqu'à 1,2 mm.

De manière analogue, le document "Configurational optimization of 3 TIG torches bases on bead-on welding tests"; Y. MIYAMOTO et al., Journal of the JSTP; vol. 29; N° 333; 1988-10, p. 1067-1073, décrit un procédé de soudage TIG tricathodes permettant un soudage rapide de tubes en titane de 0,7 mm d'épaisseur.

En outre, le document "Studies on twin electrode switching arc welding method"; S. Kokura et al.; 1982; p. 49-53; montre qu'un procédé TIG double cathodes permet un soudage de plaques de cuivre et d'acier doux de 3,2 mm d'épaisseurs, jusqu'à une vitesse maximale de soudage de 0,600 m.min$^{-1}$.

Par ailleurs, le document EP-A-896853 apporte encore une amélioration des procédés existants.

Cependant, ces procédés TIG multicathodes sont très souvent limités quant à l'épaisseur pouvant être soudée à pleine pénétration.

De plus, en général, ceux-ci ne sont pas adaptés aux épaisseurs supérieures à 1,5 mm ou alors ces épaisseurs peuvent être atteintes qu'au prix d'une diminution importante de la vitesse de soudage et/ou de l'efficacité de pénétration de la soudure.

Le document US-A-4,143,260 décrit une installation de soudage à trois électrodes.

Par ailleurs, le document EP-A-896 853 enseigne un procédé de soudage à l'arc électrique ne mettant en oeuvre aucun préchauffage avant soudage, ni aucune étape de finition post-soudage.

Enfin, le document DE-A-27 08 618 décrit un procédé de soudage plasma automatique mettant en oeuvre trois électrodes successives délivrant chacune une même énergie de soudage, chaque électrode étant munie de sa propre tuyère.

Le problème qui se pose alors est de pouvoir souder non seulement à une vitesse de soudage élevée, mais aussi efficacement, de préférence à pleine pénétration, du ou des matériaux à souder, y compris les épaisseurs importantes, à savoir 1,5 mm à 6 mm environ.

En d'autres termes, le but de la présente invention est d'améliorer les procédés de soudage existants, de manière à pouvoir garantir d'un point de vue industriel, des performances de productivité élevées, notamment en termes de vitesse de soudage et d'épaisseur de pénétration de la soudure.

La présente invention concerne alors un procédé de soudage plasma automatique d'au moins deux parties d'au moins une pièce métallique, par exemple les deux bords longitudinaux d'un tube, lesdites deux parties à souder étant réunies selon au moins un plan de joint, dans lequel :

(a) on génère au moins un premier jet de plasma ayant une première énergie linéaire de soudage ($\Delta$E1) de valeur positive et non nulle,

(b) on génère, sensiblement simultanément au premier jet de plasma, au moins un deuxième jet de plasma ayant une deuxième énergie linéaire de soudage ($\Delta$E2) positive et non nulle,

(c) on génère, sensiblement simultanément aux premier et deuxième jets de plasma, au moins un troisième jet de plasma ayant une troisième énergie linéaire de soudage ($\Delta$E3) de valeur positive et non nulle

(d) on opère un soudage desdites deux parties, l'une avec l'autre, en soumettant au moins une partie dudit plan de joint à souder auxdits premier, deuxième et troisième jets de plasma,

caractérisé en ce que chaque zone du plan de joint à souder est soumise successivement et de manière continue:

- à un préchauffage ou un agrafage au moyen du premier jet de plasma,
- à un soudage sensiblement à pleine pénétration au moyen du deuxième jet de plasma, et
- à un soudage de finition au moyen du troisième jet de plasma.

Dans le cadre de l'invention, l'énergie linéaire de soudage ($\Delta E$) est déterminée à partir de la formule empirique suivante :

$$\Delta E = (U \times I \times 60) / Vs$$

où :

U est la tension du courant en Volt,
I est l'intensité du courant en Ampère,
Vs est la vitesse de soudage en cm/min.

Selon le cas, le procédé de l'invention peut comprendre l'une ou plusieurs des caractéristiques suivantes :

- la première énergie linéaire de soudage ($\Delta E1$) du premier jet de plasma est inférieure à la deuxième énergie linéaire de soudage ($\Delta E2$) deuxième jet de plasma ;
- la troisième énergie linéaire de soudage ($\Delta E3$) dudit troisième jet de plasma est inférieure à la deuxième énergie linéaire de soudage ($\Delta E2$) dudit deuxième jet de plasma ;
- le soudage sensiblement à pleine pénétration est en mode key-hole;
- durant le soudage de finition, le troisième jet de plasma peut être animé d'un mouvement d'oscillation, par exemple par déviation électro-magnétique de l'arc ;
- la vitesse de soudage est comprise entre environ 0.8 6 m.min$^{-1}$ et 6 m.min$^{-1}$ ;
- la première énergie linéaire de soudage ($\Delta E1$) du premier jet de plasma est comprise entre 0.5 et 2.5 kJ/cm;
- la deuxième énergie linéaire de soudage ($\Delta E2$) du deuxième jet de plasma est comprise entre 1.5 et 3 kJ/cm;
- la troisième énergie linéaire de soudage ($\Delta E3$) du troisième jet de plasma est comprise entre 1 et 2.5 kJ/cm;
- l'épaisseur moyenne de la ou des pièces métalliques au niveau d'au moins une partie du plan de joint est comprise entre 0.5 mm et 7 mm; de préférence d'environ 1 mm à 6 mm, de préférence d'au moins 1.5 mm ;
- la ou les pièces métalliques sont en un métal choisi parmi les aciers carbone, les aciers inox, le nickel, l'aluminium et les alliages métalliques les contenant.

Contrairement à un procédé de soudage TIG multicathodes, selon l'art antérieur, le procédé de soudage multiplasma selon l'invention permet d'augmenter l'efficacité du soudage étant donné que la densité d'énergie de chaque jet de plasma est nettement supérieure à celle pouvant être obtenue en soudage TIG.

En outre, le procédé multiplasma selon l'invention présente un intérêt important, à savoir qu'en jouant sur la densité d'énergie de chaque jet de plasma, il est possible d'attribuer à chacun desdits jets une énergie linéaire de soudage ($\Delta E$) différente et donc une fonction différente durant l'opération de soudage.

Ainsi, dans le cas d'un procédé triple plasma selon l'invention, lequel met en oeuvre 3 jets de plasma, on peut choisir un niveau de densité d'énergie différent pour chacun des jets, de manière à obtenir:

- un premier jet de plasma dont l'énergie linéaire de soudage ($\Delta E1$) est fixée à une valeur permettant de réaliser un préchauffage concentré du niveau du plan de joint, par exemple une énergie de 1 kJ/cm ;
- un deuxième jet de plasma dont l'énergie linéaire de soudage ($\Delta E2$) est fixée à une valeur permettant de réaliser un soudage en mode key-hole à pleine pénétration du ou des matériaux à souder pour aboutir à la réalisation d'un cordon de soudure étroit, par exemple une énergie de 2 kJ/cm ;
- et un troisième jet de plasma dont l'énergie linéaire de soudage ($\Delta E3$) est fixée à une valeur permettant de réaliser un soudage de finition du cordon de soudure réalisé, par exemple une énergie de 1.5 kJ/cm.

Toutefois, d'autres variantes du procédé peuvent aussi être mise en oeuvre avec succès en fonction de l'épaisseur à souder, par exemple :

- pour une épaisseur de 2.5 à 3.5 mm, on génère un premier jet de plasma dont l'énergie ($\Delta E1$) est fixée à 1.5 kJ/cm pour réaliser un agrafage du plan de joint, c'est-à-dire un soudage à pénétration seulement partielle, un deuxième jet de plasma dont l'énergie ($\Delta E2$) est fixée à 2 kJ/cm pour réaliser un soudage à pleine pénétration en mode key-hole et troisième jet de plasma dont l'énergie ($\Delta E3$) est fixée à 2.5 kJ/cm pour réaliser un lissage de finition du cordon de soudure ; et

- pour une épaisseur > 3.5 mm, on génère un premier jet de plasma dont l'énergie ($\Delta E1$) est fixée à 2.5 kJ/cm pour réaliser un agrafage du plan de joint, un deuxième jet de plasma dont l'énergie ($\Delta E2$) est fixée à 3 kJ/cm pour réaliser un soudage en mode key-hole et troisième jet de plasma dont l'énergie ($\Delta E3$) est fixée à 2.5 kJ/cm pour réaliser un lissage de finition.

Il s'ensuit que le procédé de l'invention permet une grande souplesse d'utilisation et conduit à des cordons de soudure étroits et ce, même pour des épaisseurs élevées, c'est-à-dire de 1,5 mm à 6 mm environ.

En outre, de préférence, on augmente l'efficacité du procédé triplasma selon l'invention en opérant ou en respectant la répartition des prises masses telle que préconisée dans le document EP-A-896853, incorporé ici par références.

Selon un autre aspect, l'invention concerne également une installation de soudage multi-plasma automatique selon la revendication 10.

De préférence, la distance séparant les orifices de sortie des tuyères internes de deux torches successives est comprise entre 20 et 30 mm.

Avantageusement, le procédé de l'invention peut être utilisé pour fabriquer un tube métallique à partir d'une feuille métallique ayant une épaisseur comprise entre 0.5 mm et 6 mm et dont deux bords longitudinaux formant des extrémités de ladite feuille métallique sont réunis bout-à-bout selon un plan de joint et soudés l'un avec l'autre le long dudit plan de joint.

L'invention va maintenant être décrite plus en détail l'aide d'exemples et en référence aux figures annexées, donnés à titre illustratif mais non limitatif.

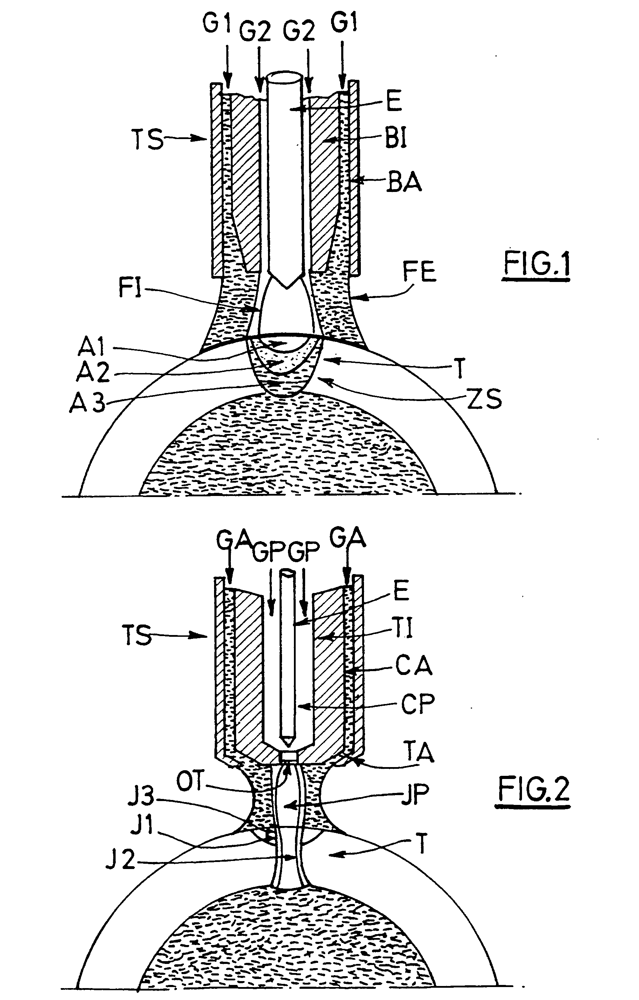

La figure 1 schématise une opération de soudage TIG tricathodes sous double flux de protection selon l'art antérieur, dans laquelle le soudage étant réalisé sur un tube T métallique, vu en coupe partielle.

On voit une torche de soudage comportant une rangée de 3 électrodes E réfractaires en tungstène alignées, en vue de face (une seule électrode représentée), chacune desdites électrodes E étant située à l'intérieur de 2 buses concentriques, à savoir une buse interne BI et une buse annulaire BA, formant manchon autour de chaque électrode E.

Un premier gaz G1 de protection chemine entre chaque buse annulaire BA et chaque buse interne BI, et un deuxième gaz G2 de protection chemine, quant à lui, entre chaque buse interne BI et chaque électrode E, de manière à former une atmosphère gazeuse de protection au niveau de la zone de soudage ZS.

Ladite atmosphère gazeuse de protection est constituée d'un gaz unique ou d'un mélange de plusieurs gaz, par exemple d'hélium et d'argon ou d'hydrogène et d'argon.

Les premier et deuxième gaz G1 et G2 sont distribués en sortie des buses interne BI et annulaire BA en un flux interne FI central et en un flux externe périphérique.

Comme on peut le constater sur la figure 1, chaque électrode E génère un arc électrique A1, A2 et A3, lequel arc électrique va permettre une pénétration progressive de l'épaisseur du tube T à souder, au niveau de la zone de soudage ZS jusqu'à former un plan de joint.

Cependant, comme expliqué ci-avant, ce type de soudage ne permet pas d'obtenir des performances élevées, notamment lorsque l'épaisseur du tube T à souder est supérieure à 1,5 mm.

La figure 2 schématise, quant à elle, une opération de soudage triplasma d'un tube T selon la présente invention.

La torche de soudage TS automatique comporte aussi 3 électrodes E alignées (1 seule électrode représentée) en vue de face.

Chaque électrode E est insérée à l'intérieur d'une tuyère interne TI munie d'un orifice de tuyère OT permettant la sortie du jet de plasma JP.

Chaque tuyère interne TI est, quant à elle, entourée d'une buse annulaire BA externe.

Un gaz plasmagène GP est introduit dans la chambre plasmagène CP de chaque tuyère interne GI, où il s'ionise au contact de l'arc électrique délivré par l'électrode E, avant d'être éjecté par l'orifice OT de sortie.

Un gaz annulaire GA de protection est acheminé par la chambre annulaire CA située entre les parois des tuyères interne TI et annulaire.

Au niveau de la zone de soudage ZS, le premier jet de plasma J1 permet d'obtenir une préchauffage du plan de joint du tube T ou un agrafage de celui-ci, le deuxième jet J2 de plasma, dont l'énergie linéaire de soudage ($\Delta E2$) est supérieure à celle ($\Delta E1$) du premier jet de plasma J, permet de réaliser un soudage en mode key-hole à pleine pénétration, c'est-à-dire sur toute l'épaisseur du tube T, et le troisième jet J3 de plasma permet d'effectuer un soudage de finition sous une énergie linéaire de soudage ($\Delta E3$) plus faible que celle ($\Delta E2$) du deuxième jet J2 de plasma.

La figure 3 schématise une installation automatique de soudage TIG tricathodes selon l'art antérieur, alors que les figures 4 et 5 représentent des schémas de deux modes de réalisation d'une installation triplasma selon la présente invention.

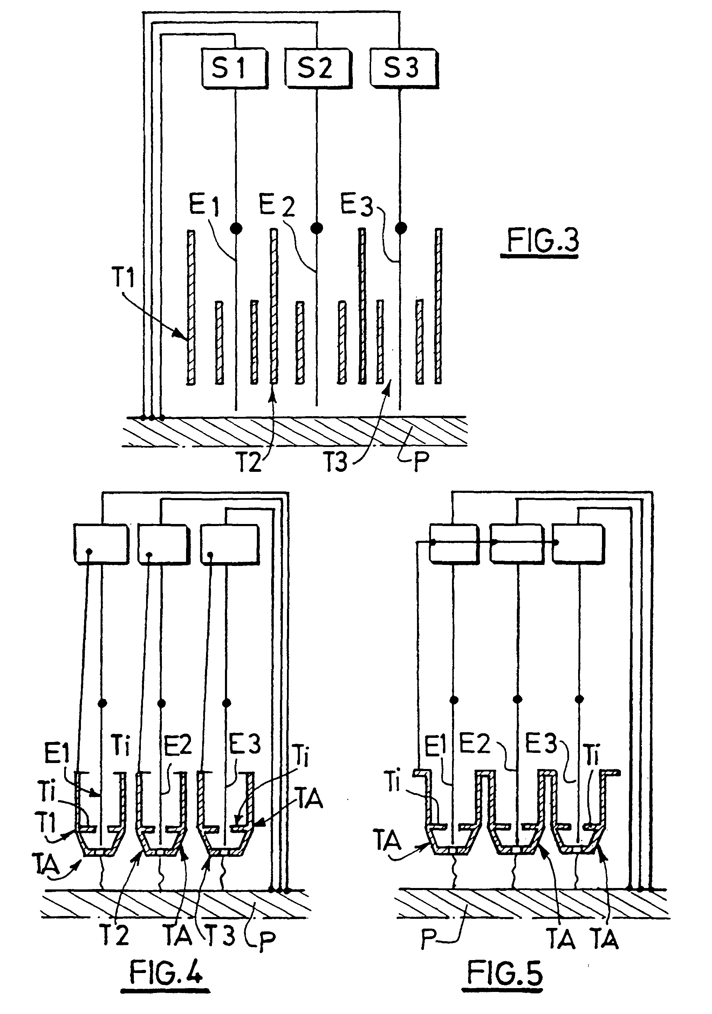

Plus précisément, on voit sur la figure 3 trois torches T1 à T3 munies de buse B1 à B2 à double flux, analogues à celles de la figure 1, comprenant chacune une électrode E1 à E3 en tungstène, placée en regard d'une pièce P à souder.

Chaque électrode E1 à E3 est alimentée en courant électrique par une source S1 à S3 de courant qui lui est propre.

Les torches T1 à T3 sont indépendantes les unes des autres et l'allumage des arc électriques se fait entre les électrodes E1 à E3 et la pièce P.

La figure 4 représente un premier mode de réalisation d'une installation automatique de soudage triplasma mettant en oeuvre le procédé selon l'invention comportant, 3 torches à plasma indépendantes les unes des autres.

Chaque torche T1 à T3 est munie d'une électrode E1 à E3, respectivement, d'un tuyère interne TI et d'une tuyère annulaire TA, ainsi que schématisé sur la figure 2.

Dans ce cas, chaque tuyère interne TI est isolée électriquement des autres tuyères internes TI et, de manière analogue, chaque tuyère annulaire TA est isolée électriquement des autres tuyères annulaires TA.

L'établissement des jets de plasma se fait par création, d'abord, d'un arc pilote entre chaque électrode et chaque tuyère interne TI, puis transfert de l'arc électrique et du gaz plasmagène ionisé, donc du jet de plasma, vers la pièce P à souder.

La figure 5 est analogue à la figure 4, mais représente le mode de réalisation de l'installation de soudage multiplasma automatique selon de l'invention, dans lequel les 3 torches T1 à T3 possèdent une seule et même tuyère TU formant une bloc-tuyère unique.

Dans ce cas, le système d'amorçage haute fréquence et d'arc pilote est commun aux 3 torches et la protection gazeuse est également unique.

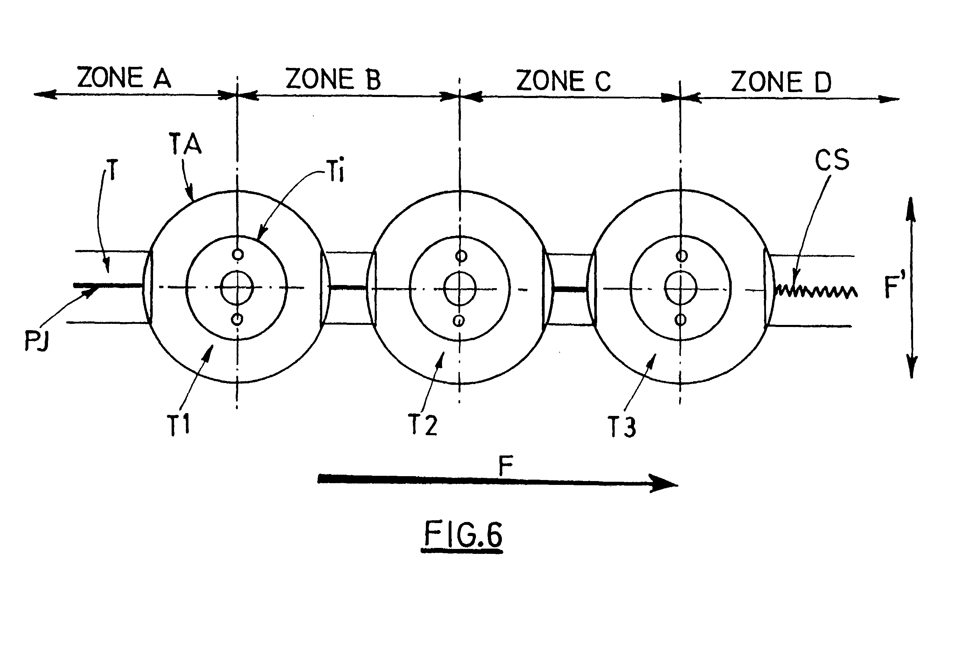

La figure 6 est un schéma, en vue de dessous, de l'utilisation d'une installation triplasmas selon l'invention pour fabriquer des tubes T métalliques à partir d'une feuille métallique dont les deux bords longitudinaux sont rapprochés l'un de l'autre de manière former le plan de joint PJ à souder.

Cette installation est analogue à celle de la figure 5 et comprend une rangée de 3 torches à plasma, T1, T2 et T3, alignées et comportant chacune une tuyère interne TI et une tuyère annulaire TA; lesdites tuyères annulaire TA étant formées d'un bloc-tuyère unique.

Le tube T à souder est animé d'un mouvement de déplacement relatif en translation par rapport à la rangée de torche T1 à T3; le sens de déplacement du tube T étant le sens de la flèche F.

L'énergie linéaire de soudage de la torche T1 est réglée pour opérer un préchauffage ou un agrafage du plan de joint.

L'énergie linéaire de soudage de la torche T2 est réglée pour opérer un soudage à pleine pénétration en mode key-hole du plan de joint.

L'énergie linéaire de soudage de la torche T3 est réglée pour opérer un soudage de finition du cordon de soudage, de préférence le jet de plasma délivré par la torche T3 est animé d'un mouvement oscillant comme indiqué par la flèche F'.

Comme on peut le voir, l'ensemble du plan de joint PJ peut être décomposé en 4 zones A, B, C et D distinctes.

Plus précisément, la zone A correspond à la partie du plan de joint PJ du tube T n'ayant pas encore été soumise à un des jets de plasma.

La zone B correspond à la partie du plan de joint PJ ayant subi un préchauffage ou un agrafage par mise en contact avec le premier jet de plasma délivré par la torche T1.

La zone C correspond à la partie du plan de joint PJ ayant subi successivement le préchauffage ou l'agrafage (zone B) puis un soudage à pleine pénétration en mode key-hole au moyen du deuxième jet de plasma délivré par la torche T2.

La zone D correspond à la partie du plan de joint PJ ayant subi successivement le préchauffage ou l'agrafage (zone B), le soudage à pleine pénétration (zone C), puis un soudage de finition ou remplissage au moyen du troisième jet de plasma délivré par la torche T3.

Exemple

Afin de valider le procédé triplasmas, de l'invention, on a réalisé plusieurs essais de soudage bord-à-bord jointifs de deux pièces métalliques en acier inoxydable d'épaisseur 1 à 4 mm, en utilisant plusieurs type de gaz, à savoir de l'argon, et des mélanges d'argon et d'hydrogène, en particulier les mélanges NOXAL 2™ et NOXAL 3™ commercialisés par la société L'AIR LIQUIDE, lesquels contiennent de l'argon et, respectivement, 2,5% et 5% d'hydrogène.

Les essais ont été réalisés à des débits de gaz plasmagène de 1,5 l.min$^{-1}$ à 4 l.min$^{-1}$. En outre, on a fait varier la distance électrode/tuyère de 0,5 mm à 3 mm.

Dans tous les cas, les résultats ont été satisfaisants et ont permis d'obtenir un soudage efficace à pleine pénétration pour des vitesses de soudage atteignant 4 m/min à 6 m/min et ce, pour des épaisseurs nettement supérieures (jusqu'à 4 mm) à celles atteintes classiquement en soudage TIG, ainsi qu'une augmentation très significative de la tenue des électrodes par rapport au soudage TIG traditionnel où les électrodes doivent être changées, au mieux, toutes les 4 à 5 heures en engendrant, par là même, à chaque remplacement, un arrêt de l'installation de soudage.

En outre, selon l'invention, la stabilité des 3 arcs plasma a été jugée également satisfaisante dans tous les cas et aucune difficulté d'amorçage n'a pu être détectée pour les divers gaz utilisés.

**Revendications**

1. Procédé de soudage plasma automatique d'au moins deux parties d'au moins une pièce métallique, lesdites deux parties à souder étant réunies selon au moins un plan de joint, dans lequel :

   (a) on génère au moins un premier jet de plasma ayant une première énergie linéaire de soudage (ΔE1) de valeur positive et non nulle,
   (b) on génère, sensiblement simultanément au premier jet de plasma, au moins un deuxième jet de plasma ayant une deuxième énergie linéaire de soudage (ΔE2) positive et non nulle,
   (c) on génère, sensiblement simultanément aux premier et deuxième jets de plasma, au moins un troisième jet de plasma ayant une troisième énergie linéaire de soudage (ΔE3) de valeur positive et non nulle
   (d) on opère un soudage desdites deux parties, l'une avec l'autre, en soumettant au moins une partie dudit plan de joint à souder auxdits premier, deuxième et troisième jets de plasma,

**caractérisé en ce que** chaque zone du plan de joint à souder est soumise successivement et de manière continue:

- à un préchauffage ou un agrafage au moyen du premier jet de plasma,
- à un soudage sensiblement à pleine pénétration au moyen du deuxième jet de plasma, et
- à un soudage de finition au moyen du troisième jet de plasma.

2. Procédé selon la revendication 1, **caractérisé en ce que** la première énergie linéaire de soudage ($\Delta$E1) dudit premier jet de plasma est inférieure à la deuxième énergie linéaire de soudage ($\Delta$E2) dudit deuxième jet de plasma.

3. Procédé selon l'une des revendications 1 ou 2, **caractérisé en ce que** la troisième énergie linéaire de soudage ($\Delta$E3) dudit troisième jet de plasma est inférieure à la deuxième énergie linéaire de soudage ($\Delta$E2) dudit deuxième jet de plasma.

4. Procédé selon l'une des revendications 1 à 3, **caractérisé en ce que** le soudage sensiblement à pleine pénétration au moyen du deuxième jet de plasma est opéré en mode key-hole.

5. Procédé selon la revendication 4, **caractérisé en ce que**, durant le soudage de finition, le troisième jet de plasma est animé d'un mouvement d'oscillation.

6. Procédé selon l'une des revendications 1 à 5, **caractérisé en ce que** la vitesse de soudage est comprise entre 0.8 et 6 m.min$^{-1}$.

7. Procédé selon l'une des revendications 1 à 6, **caractérisé en ce que** la première énergie linéaire de soudage ($\Delta$E1) du premier jet de plasma est comprise entre 0.5 et 2.5 kJ/cm, et/ou la deuxième énergie linéaire de soudage ($\Delta$E2) du deuxième jet de plasma est comprise entre 1.5 et 3 kJ/cm, et/ou la troisième énergie linéaire de soudage ($\Delta$E3) du troisième jet de plasma est comprise entre 1 et 2.5 kJ/cm.

8. Procédé selon l'une des revendications 1 à 7, **caractérisé en ce que** l'épaisseur moyenne de ladite au moins une pièce métallique au niveau d'au moins une partie du plan de joint est comprise entre 0.5 mm et 7 mm, de préférence d'environ 1 mm à 6 mm.

9. Procédé selon l'une des revendications 1 à 8, **caractérisé en ce que** ladite au moins une pièce métallique est en un métal choisi parmi les aciers carbone, les aciers inox, le nickel, l'aluminium et les alliages métalliques les contenant.

10. Installation de soudage multi-plasma automatique d'au moins deux parties d'au moins une pièce métallique (P), susceptible de mettre en oeuvre un procédé selon l'une des revendications 1 à 9, comprenant des moyens-supports portant au moins trois torches à plasma alignées (T1, T2, T3), chaque torche à plasma comprenant une électrode (E1, E2, E3) et au moins une tuyère interne (TI) munie d'un orifice de sortie (OT), lesdites torches à plasma étant munies d'un bloc-tuyère unique formant lesdites buses annulaires (BA), **caractérisée en ce que** la distance séparant les orifices de sortie des tuyères internes (TI) de deux torches successives (T1, T2, T3) est comprise entre 16 mm et 40 mm, et les torches ont un système d'amorçage haute fréquence et d'arc pilote commun.

11. Installation selon la revendication 10, **caractérisée en ce que** la distance séparant les orifices de sortie (OT) des tuyères internes de deux torches successives (T1, T2, T3) est comprise entre 20 et 30 mm.

12. Utilisation d'un procédé de soudage selon l'une des revendications 1 à 9 pour la fabrication d'un tube (T) métallique à partir d'une feuille métallique ayant une épaisseur comprise entre 0.5 mm et 6 mm et dont deux bords longitudinaux formant des extrémités de ladite feuille métallique sont réunis bout-à-bout selon un plan de joint et soudés l'un avec l'autre le long dudit plan de joint.

**Patentansprüche**

1. Verfahren zum automatischen Plasmaschweißen von mindestens zwei Teilen von mindestens einem Metallstück, wobei die beiden zu verschweißenden Teile mindestens mittels einer Stoßfläche zusammengefügt werden, bei dem:

a) mindestens ein erster Plasmastrahl erzeugt wird, welcher eine erste lineare Schweißenergie ($\Delta$E1) aufweist, die einen positiven Wert hat und nicht Null ist,
b) im Wesentlichen gleichzeitig mit dem ersten Plasmastrahl mindestens ein zweiter Plasmastrahl erzeugt wird, welcher eine zweite lineare Schweißenergie ($\Delta$E2) aufweist, die positiv und nicht Null ist,
c) im Wesentlichen gleichzeitig mit dem ersten und zweiten Plasmastrahl mindestens ein dritter Plasmastrahl erzeugt wird, welcher eine dritte lineare Schweißenergie ($\Delta$E3) aufweist, die einen positiven Wert hat und nicht Null ist,
d) ein Verschweißen der beiden Teile miteinander vorgenommen wird, bei dem mindestens ein Teil der zu verschweißenden Stoßfläche dem ersten, zweiten und dritten Plasmastrahl ausgesetzt wird,

**dadurch gekennzeichnet, dass** jeder Bereich der zu verschweißenden Stoßfläche aufeinander folgend und auf kontinuierliche Weise Folgendem ausgesetzt wird:

- einem Vorwärmen oder einem zusammenheften mittels eines ersten Plasmastrahls,
- einem Schweißen bei im Wesentlichen vollem Einbrand mittels des zweiten Plasmastrahls, und
- einem Fertigschweißen mittels des dritten Plasmastrahls.

2. Verfahren nach Anspruch 1, **dadurch gekennzeichnet, dass** die erste lineare Schweißenergie (∆E1) des ersten Plasmastrahls niedriger als die zweite lineare Schweißenergie (∆E2) des zweiten Plasmastrahls ist.

3. Verfahren nach einem der Ansprüche 1 oder 2, **dadurch gekennzeichnet, dass** die dritte lineare Schweißenergie (∆E3) des dritten Plasmastrahls niedriger als die zweite lineare Schweißenergie (∆E2) des zweiten Plasmastrahls ist.

4. Verfahren nach einem der Ansprüche 1 bis 3, **dadurch gekennzeichnet, dass** das Schweißen bei im Wesentlichen vollem Einbrand mittels des zweiten Plasmastrahls im Schlüssellochverfahren betrieben wird.

5. Verfahren nach Anspruch 4, **dadurch gekennzeichnet, dass** der dritte Plasmastrahl während des Fertigschweißens in eine oszillierende Bewegung gebracht wird.

6. Verfahren nach einem der Ansprüche 1 bis 5, **dadurch gekennzeichnet, dass** die Schweißgeschwindigkeit zwischen 0,8 und 6 m/min$^{-1}$ beträgt.

7. Verfahren nach einem der Ansprüche 1 bis 6, **dadurch gekennzeichnet, dass** die erste lineare Schweißenergie (∆E1) des ersten Plasmastrahls zwischen 0,5 und 2,5 kJ/cm, und/oder die zweite lineare Schweißenergie (∆E2) des zweiten Plasmastrahls zwischen 1,5 und 3 kJ/cm, und/oder die dritte lineare Schweißenergie (∆E3) des dritten Plasmastrahls zwischen 1 und 2,5 kJ/cm beträgt.

8. Verfahren nach einem der Ansprüche 1 bis 7, **dadurch gekennzeichnet, dass** die mittlere Dicke des mindestens einen Metallstückes in Höhe von mindestens einem Teil der Stoßfläche zwischen 0,5 mm und 7 mm, vorzugsweise ungefähr 1 mm bis 6 mm, beträgt.

9. Verfahren nach einem der Ansprüche 1 bis 8, **dadurch gekennzeichnet, dass** das mindestens eine Metallstück aus einem Metall besteht, welcher aus Kohlenstoffstahl, rostfreiem Stahl, Nickel, Aluminium und den sie enthaltenden Metalllegierungen ausgewählt wird.

10. Automatische Mehrfachplasmaschweißanlage von mindestens zwei Teilen von mindestens einem Metallstück (P), die geeignet ist, ein Verfahren gemäß einem der Ansprüche 1 bis 9 einzusetzen, Trägermittel umfassend, die mindestens drei ausgerichtete Plasmabrenner (T1, T2, T3) tragen, wobei jeder Plasmabrenner eine Elektrode (E1, E2, E3) und mindestens eine innere Düse (TI) umfasst, die mit einer Ausgangsöffnung (OT) ausgestattet ist, wobei die Plasmabrenner mit einem einzigen Düsenblock ausgestattet sind, welcher die ringförmigen Düsen (BA) ausbildet, **dadurch gekennzeichnet, dass** der Abstand, welcher die Ausgangsöffnungen der inneren Düsen (TI) von zwei aufeinander folgenden Brennern (T1, T2, T3) trennt, zwischen 16 mm und 40 mm beträgt, und die Brenner ein gemeinsames System einer Hochfrequenzzündung und eines Zündlichtbogens aufweisen.

11. Anlage nach Anspruch 10, **dadurch gekennzeichnet dass** der Abstand, welcher die Ausgangsöffnungen (OT) der inneren Düsen von zwei aufeinander folgenden Brennern (T1, T2, T3) trennt, zwischen 20 und 30 mm beträgt.

12. Verwendung eines Verfahrens zum Schweißen nach einem der Ansprüche 1 bis 9 zur Herstellung eines metallischen Rohres (T) ausgehend von einer Metallfolie, die eine Dicke von zwischen 0,5 mm und 6 mm aufweist und deren zwei längliche Ränder, welche die Enden der Metallfolie ausbilden, Stoß auf Stoß gemäß einer Stoßfläche zusammengefügt werden und entlang der Stoßfläche miteinander verschweißt werden.

## Claims

1. Process for the automatic plasma welding of at least two parts of at least one metal workpiece, said two parts to be welded being joined together in at least one joint plane, in which:

(a) at least a first plasma jet having a first linear welding energy (∆E1) of positive and non-zero value is generated;
(b) at least a second plasma jet having a second positive and non-zero linear welding energy (∆E2) is generated, approximately at the same time as the first plasma jet;

(c) at least a third plasma jet having a third linear welding energy ($\Delta E3$) of positive and non-zero value is generated approximately at the same time as the first and second plasma jets;

(d) said two parts are welded together by subjecting at least one part of said joint plane to be welded to said first, second and third plasma jets,

**characterized in that** each zone of the joint plane to be welded is subjected in succession and in a continuous manner:

- to preheating or stapling by means of the first plasma jet;
- to approximately full-penetration welding by means of the second plasma jet; and
- to finish welding by means of the third plasma jet.

2. Process according to Claim 1, **characterized in that** the first linear welding energy ($\Delta E1$) of said first plasma jet is less than the second linear welding energy ($\Delta E2$) of said second plasma jet.

3. Process according to either of Claims 1 and 2, **characterized in that** the third linear welding energy ($\Delta E3$) of said third plasma jet is less than the second linear welding energy ($\Delta E2$) of said second plasma jet.

4. Process according to one of Claims 1 to 3, **characterized in that** the approximately full-penetration welding by means of the second plasma jet is carried out in keyhole mode.

5. Process according to Claim 4, **characterized in that**, during the finish welding, the third plasma jet is given an oscillatory motion.

6. Process according to one of Claims 1 to 5, **characterized in that** the welding speed is between 0.8 and 6 m/min.

7. Process according to one of Claims 1 to 6, **characterized in that** the first linear welding energy ($\Delta E1$) of the first plasma jet is between 0.5 and 2.5 kJ/cm and/or the second linear welding energy ($\Delta E2$) of the second plasma jet is between 1.5 and 3 kJ/cm and/or the third linear welding energy ($\Delta E3$) of the third plasma jet is between 1 and 2.5 kJ/cm.

8. Process according to one of Claims 1 to 7, **characterized in that** the mean thickness of said at least one metal workpiece in at least one part of the joint plane is between 0.5 mm and 7 mm, preferably about 1 mm to 6 mm.

9. Process according to one of Claims 1 to 8, **characterized in that** said at least one metal workpiece is made of a metal chosen from carbon steels, stainless steels, nickel, aluminium and metal alloys containing them.

10. Device for the automatic multiplasma welding of at least two parts of at least one metal workpiece (P), capable of implementing a process according to one of Claims 1 to 9, comprising support means which support at least three aligned plasma torches (T1, T2, T3), each plasma torch including an electrode (E1, E2, E3) and at least one internal nozzle (IN) provided with an outlet orifice (NO), said plasma torches being provided with a single nozzle block forming said annular nozzles (AN), **characterized in that** the distance separating the outlet orifices of the internal nozzles (IN) of two successive torches (T1, T2, T3) is between 16 mm and 40 mm and the torches have a common high-frequency-striking/pilot-arc system.

11. Device according to Claim 10, **characterized in that** the distance separating the outlet orifices (NO) of the internal nozzles of two successive torches (T1, T2, T3) is between 20 and 30 mm.

12. Use of a welding process according to one of Claims 1 to 9 for the manufacture of a metal pipe (P) from a metal sheet having a thickness of between 0.5 mm and 6 mm and two longitudinal edges of which, forming ends of said metal sheet, are joined together end to end in a joint plane and welded together along said joint plane.

FIG.1

FIG.2

FIG.3

FIG.4

FIG.5

ZONE A | ZONE B | ZONE C | ZONE D

FIG.6

EP 1 181 126 B1